# EUROPEAN PATENT SPECIFICATION

(11) **EP 4 276 656 B1**
(45) Date of publication and mention of the grant of the patent: **01.10.2025**
(21) Application number: 23173095.3
(22) Date of filing: 12.05.2023
(51) Int. Cl.: G06F 16/50, G06Q 99/00

(54) **TOILET SEAT IDENTIFICATION**
TOILETTENSITZIDENTIFIKATION
IDENTIFICATION DE SIÈGE DE TOILETTES

(30) Priority: 13.05.2022 GB 202207023
(43) Date of publication of application: 15.11.2023
(73) Proprietor: Ellsi Limited, Scunthorpe, Lincolnshire DN15 8SL (GB)
(72) Inventor: Delaney, Paul, Scunthorpe, DN15 8SL (GB)
(74) Representative: Aldridge, Christopher Simon

(56) References cited:
- EP-A1- 2 175 413
- US-A1- 2010 049 478
- US-A1- 2015 287 117

## Description

### Field of the Invention

The invention relates to a system for identifying the size and shape of a toilet pan and, preferably, locating where suitable toilet seats that fit to the toilet pan are available.

### Background to the Invention

Toilet pans come in a variety of different shapes and sizes, for example, they can be rounded, elongate, D-shaped, U-shaped or square-shaped. As a result of the many types and sizes of toilet pans there are a plethora of different toilet seats that can fit those toilet pans; however, the suitability of toilet seats to fit the toilet pan is further complicated by the location, spacing and sizing of the toilet seat fixing apertures on a toilet pan. As a result of all of these variables, only certain seats will fit some toilet pans and, oftentimes, the wrong sized or shaped seat is applied to a toilet pan, which results in the toilet being uncomfortable or aesthetically displeasing.

Whilst the toilet pan can be measured, many people that are replacing toilet seats are not aware of the many dimensions that they need, along with the shape variations and, even if they do have all of that information, the hassle of traveling to a location and attempting to purchase the correct replacement toilet seat can be frustrated if the required seat is not in stock. Whilst some stores do include details of their stock levels online, it can be difficult from images on a website to know if the seat is correct.

Customers purchasing the wrong size and shape toilet seat reflects badly upon a retailer and so there is a need to more clearly identify which toilet seats might be suitable for a particular toilet pan.

EP2175413 (Hamberger Industriewerke GmbH) discloses a system for scanning a toilet ceramic using a reference device and determining toilets seats that fit the ceramic, after which stock levels can be determined.

### Summary of the Invention

Accordingly, the present invention is directed to a method of identifying a toilet seat, as set out in accompanying claim 1. Preferred features are set out in the accompanying subclaims.

Thus, the invention includes the steps of:
optically capturing an image of a toilet pan;
processing the optically captured image to determine at least two characteristics from a group comprising: the distance between the fixing apertures of the toilet pan; the distance from the mid-point of the fixing apertures to the apex of the front of the toilet pan; the shape of the front edge of the toilet pan; and the diameter of the fixing apertures;
interrogating a toilet seat database to determine matching toilet seats that have the same characteristics as the determined characteristics;
interrogating at least one external stock database to establish the location of stock of the matching toilet seat.

Thus, a scanning device, in the form of a smartphone, which is a mobile telephone or "cell phone", can be used to optically capture an image of a toilet pan for which a toilet seat is required. Once captured, the image can be processed to determine characteristics of the toilet pan, which may relate to the size and shape of the toilet pan. This may be undertaken on the scanning device, or it may be processed upon a secondary device, for example, on a remote server. It will be appreciated that a software application may be stored locally or remotely to process the image.

Once the characteristics and/or dimensions of the toilet pan have been determined from processing the image, a database of toilet seats can be interrogated. The database is occupied with the necessary parameters for identifying which toilet seats might be suitable for the subject toilet pan. Once the matching toilet seats have been identified, the system can then interrogate a further database to determine where stock of the subject toilet seats is located. It will be appreciated that in order to determine the most suitable toilet seats, the whole of the toilet pan should be in the captured image. Where only part of the toilet pan is identified, the system may request a further image is obtained to either match up the missing part or to re-process the complete image.

Again, the processing of the image and the interrogation of a toilet seat database may be carried out locally, or, preferably, the toilet seat database is accessed remotely. By having a remote toilet seat database, the information can be readily updated, rather than having to update the scanning device, although it will be appreciated that in some situations it may be desirable to have a local database, which can be updated periodically.

It is advantageous that once the matching toilet seats have been identified from the toilet seat database, user input is requested to identify desirable features and further interrogating the toilet seat database to identify matching filtered toilet seats before interrogating the at least one external stock database. Thus, once the initial search to identify suitable seats has been undertaken, a user may filter the results to input certain further parameters, for example, material, closure mechanism, fixing preference, finish and/or colour preferences. As a result, the number of suitably fitting seats can be reduced to a preferred range of seats.

It is preferable that the method further comprises the step of generating a list of uniform reference locators (URLSs) that identify locations where stock of the matching toilet seat or matching filtered toilet seat is available. The locations may be online and/or physical locations to allow a user to choose between purchasing the toilet seat online or in person.

In one arrangement, a predetermined marker is placed on the toilet pan and the marker is used as a reference to determine at least one characteristic of the toilet pan. The marker can be of a known size, shape and/or colour and this marker can be used as a reference to further identify the characteristics of the toilet pan. This allows a known element to be employed to give a more accurate analysis of the toilet pan during the processing steps.

In an alternative arrangement, the dimensions can be calculated from the image without requiring a reference element or marker to be present in the image. In such a system, it may be advantageous to employ a levelling sensor, such as one or more of an accelerometer, a gyroscopic and a magnetometer. By ensuring that the image capturing device is level, the image can be interrogated to determine the relative dimensions. As toilet pans have some dimensions that are required to be within a known range, for example, the distance between seat fixing apertures and the diameters of those apertures, the rest of the dimensions of the toilet pan can be determined, without reference to a marker. It will be appreciated that having the image acquired from a plane substantially parallel to the top of the toilet pan may be desirable, and so the image may not be perfectly horizontal.

The image is captured on a smartphone, which will have a touch screen. It may be desirable to have the user touch the screen at certain positions that correspond to points on the toilet pan. It may be useful for the user to position the toilet pan within a template or frame that is shown on the screen. The user can be prompted to touch the screen or to position a virtual, on-screen marker, at the location of certain features of the toilet pan. Therefore, the user may be asked to identify the location of the apex of the internal and/or external front edge of the toilet pan, the widest parts of the toilet pan, the front and back of the external or internal edges of the rim and/or the positions along an axis of the pan.

In some arrangements, the user may be required to remove a fitted seat to clearly show the toilet pan. Alternatively, the user may keep the existing seat in place and lift it up to expose the toilet pan. It may be that the system can be used to calculate the dimensions of a seat already fitted to the toilet pan, so that a corresponding seat can be identified. The software application may have an option to notify the system that the seat is fitted or removed, or it may determine this during the image processing.

### Brief Description of the Drawings

Embodiments of the invention will now be described, by way of example only, and with reference to the accompanying drawings, in which:
Figure 1 shows a schematic diagram of part of the system in accordance with the present invention;
Figure 2 shows a flow chart in relation to the system of the present invention; and
Figure 3 shows a toilet pan and marker in accordance with an embodiment of the present invention.

### Detailed Description of Exemplary Embodiments

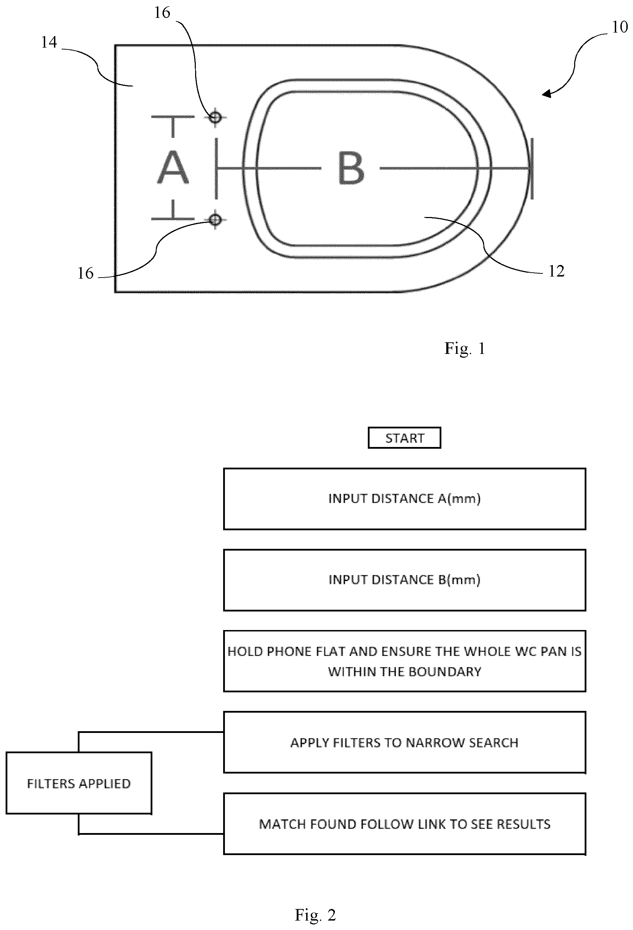

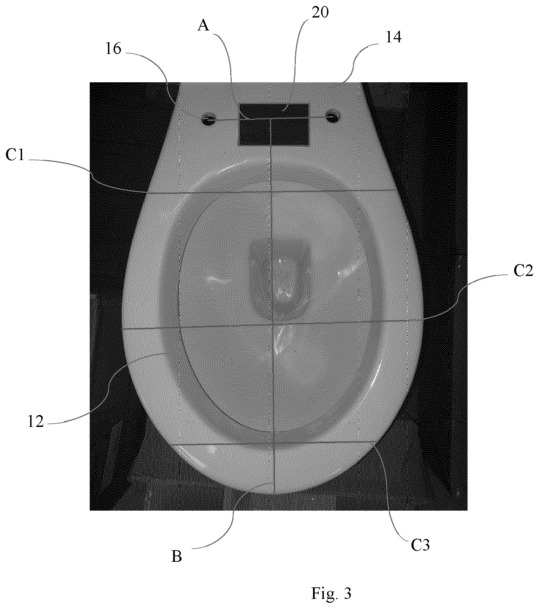

Figures 1 and 3 show a toilet pan 10 having a bowl section 12 and a biscuit 14, the biscuit 14 having two seat fixing apertures 16.

Two lengths are marked upon Figure 1, namely:
the fixing aperture distance A, which is the distance between the two seat fixing apertures 16; and
the bowl length B, which is the distance between the central point between the two seat fixing apertures 16 and the apex of the front curve of the bowl.

These two lengths A and B can be used to determine other dimensions of the toilet pan 10.

Figure 2 is a flow chart showing a first method of carrying out the present invention. In this embodiment, a user measures distances A and B and inputs those measurements into a software application running on a scanning device, for example, a smartphone. Subsequently, although it may occur prior to inputting the measurements, the toilet pan 10 is optically captured using the scanning device. The captured image is then processed to determine the shape of the toilet pan 10. This determination may be undertaken by way of detecting contrasts in the captured image, or it may be undertaken by overlaying imprints of known toilet pan shapes and analysing which image most closely matches the captured optical image.

The fixing apertures 16 can be identified in the optically captured image by identifying the approximate location and then determining contrast differences between the toilet biscuit section 14 and the fixing apertures 16. Once the image has been initially processed, the shape and orientation of the toilet pan 10 will be apparent and so the location of the fixing apertures 16 can be readily determined.

Thus, the shape of the toilet pan 10 is obtained from the step of processing the image and, using the dimensions A and B provided by the user, toilet seats that are suitable fits, particularly in respect of the size and shape of the toilet seat, are identified. The user is then able to apply filters to the results in order to select preferences in respect of seat, for example, the colour and/or finish of the toilet seat. The filters are applied to the list of identified toilet seats and then results are displayed to the user. The user may then be provided with a list of potential sources for the identified toilet seats, which can be online locations and/or physical stores. This may be undertaken by obtaining the user's location by way of global positioning data or it may be entered manually by the user.

In another embodiment, shown in Figure 3, a marker 20 is placed upon the toilet pan 10 prior to optically capturing the toilet pan 10. The marker 20 is of a known size and shape and so when the optically captured image of the toilet pan 10 is processed, the dimensions of the toilet pan 10 can be determined from the known size of the marker 20. This negates the need for a user to manually measure dimensions A and B, thereby making the process easier and quicker and reducing the risk of user error in measuring the dimensions.

To obtain a more accurate size and shape for the toilet seat, it may be desirable for the processing step to determined other, or additional, dimensions of the toilet pan 10, for example, the width of the pan 10 at intervals along the length B. This assists with determining the correct shape of the toilet pan 10.

In putting the invention into effect, an image database of known toilet pans 10 and/or known toilet seats is created, with the respective sizes, shapes, fixing styles, colours, closure mechanisms and/or other characteristics entered therein. Thus, when an image of a toilet pan 10 is optically captured and processed, it can be matched to a known toilet pan 10 and known associated toilet seats, or the image can be matched to a known toilet seat that has the required characteristics.

The scanning process may employ an accelerometer or other feature of the scanning device in order to determine whether the image is being captured correctly. For example, where the scanning device is a smartphone, sensors within the smartphone can be accessed to determine whether the smartphone is being held horizontally. Clearly, having an arcuate image of the toilet pan is required; however, during the processing of the captured image, the thickness of the respective sides of the rim of the toilet bowl can be determined to assess whether the image has been taken in a required manner to assess the size and shape of the toilet pan.

Upon determining suitable toilet seats, the user can be presented with a choice of whether to receive information regarding where to purchase the suitable toilet seat online, in a physical location or both. Where the physical location of suitable toilet seats is selected, the user's location can be requested by the device, or it may be automatically obtained using geographical location information supplied by the device.

The marker used for determining dimensions of the toilet pan may be a marker specifically for use with the present invention, or it may be any object of a known and consistent size, for example, a bank card or a coin.

It should be noted that whilst only one measurement may be required and the other dimensions calculated therefrom, having two dimensions can reduce the risk of error, particularly where the dimensions are entered by a user, rather than being calculated by the system of the present invention with reference to a known size. To that end, it may be desirable to have a user acquire two or more images in order to create a comparison between the images and ensure that the dimensions are calculated consistently. Whilst those images may be taken from a substantially horizontal angle, it could be useful to have the images obtained from two or more different angles to provide comparative data.

The dimensions may be calculated based upon ratios and known proportions between respective parts of the toilet pan. Additionally, the shape of the rim, the waste outlet and other elements may be used to determine a shape, ratio or dimension of the toilet pan. Furthermore, the position of the toilet seat fixing apertures, relative to the waste outlet and/or other elements of the toilet pan may be used in determining the shape of a toilet seat that will fit the contours of the toilet pan.

A further way in which the dimensions of the toilet pan, and associated seat, may be determined is using contrasts in the image. This may include determining shadows, in which case it may be desirable to have a light source, such as a flash illuminated when acquiring the image.

The user can be instructed in how to capture the image of the toilet pan, for example, with the full pan in view. Where an on-screen template is used and the user positions the toilet pan within that template or frame, the user can be asked to touch the screen to identify one or more positions or features. It may be that at least three positions are used, although four or five may be desirable, so that the relative distances between those points can be determined, which may then identify specific toilet seats that might fit the toilet pan. Information relating to the corresponding positions on toilet seats may be stored or dimensions and relative positions on suitable seats can be stored in a database. There may be a degree of tolerance in the points and the data obtained, for example, +/-5mm to allow of manufacturing variations.

## Claims

1. A method of identifying a toilet seat comprising the steps of:
using a smartphone to optically capture an image of a toilet pan;
receiving at least one measured dimension from a user that is input into the smartphone;
processing the optically captured image, based upon the at least one input dimension, to determine at least two characteristics from a group comprising: the distance between the fixing apertures of the toilet pan; the distance from the mid-point of the fixing apertures to the apex of the front of the toilet pan; the shape of the front edge of the toilet pan; and the diameter of the fixing apertures;
interrogating a toilet seat database to determine matching toilet seats that have the same characteristics as the determined characteristics; and
interrogating at least one external stock database to establish the location of stock of the matching toilet seat.

2. A method according to claim 1, wherein once the matching toilet seats have been identified, requesting user input to identify desirable features and further interrogating the toilet seat database to identify matching filtered toilet seats before interrogating the at least one external stock database.

3. A method according to claim 1 or claim 2, wherein the method further comprises the step of generating a list of uniform reference locators that identify locations where stock of the matching toilet seat or matching filtered toilet seat is available.

4. A method according to any one of claims 1 to 3, wherein a predetermined marker is placed on the toilet pan and the marker is used as a reference to determine at least one characteristic of the toilet pan.

5. A method according to any preceding claim, wherein the smartphone includes a levelling sensor, and the levelling sensor is used to ensure that the optically captured image is substantially parallel to the top of the toilet pan.

6. A method according to any preceding claim, wherein an on-screen template is provided, and the user positions the toilet pan within that template before capturing the image.

7. A method according to any preceding claim, wherein the user selects various points on the image prior to processing the image.

8. A method according to any preceding claim, wherein the width of the pan is determined at intervals along the length between the central point between the two seat fixing apertures and the apex of the front curve of the bowl.

## Patentansprüche

1. Verfahren zum Identifizieren eines Toilettensitzes, umfassend die folgenden Schritte:
Verwenden eines Smartphones, um ein Bild einer Toilettenschüssel optisch aufzunehmen;
Empfangen von zumindest einer gemessenen Abmessung von einem Benutzer, die in das Smartphone eingegeben wird;
Verarbeiten des optisch erfassten Bildes, basierend auf der zumindest einen eingegebenen Abmessung, um zumindest zwei Eigenschaften aus einer Gruppe zu bestimmen, umfassend: den Abstand zwischen den Befestigungsöffnungen der Toilettenschüssel; den Abstand von dem Mittelpunkt der Befestigungsöffnungen zu der Spitze der Vorderseite der Toilettenschüssel; die Form der Vorderkante der Toilettenschüssel; und den Durchmesser der Befestigungsöffnungen;
Abfragen einer Toilettensitzdatenbank, um passende Toilettensitze zu bestimmen, die dieselben Eigenschaften wie die bestimmten Eigenschaften aufweisen; und
Abfragen von zumindest einer externen Bestandsdatenbank, um den Bestandsort des passenden Toilettensitzes zu ermitteln.

2. Verfahren nach Anspruch 1, wobei, sobald die passenden Toilettensitze identifiziert worden sind, Benutzereingabe angefordert wird, um wünschenswerte Merkmale zu identifizieren, und ferner die Toilettensitzdatenbank abgefragt wird, um passende gefilterte Toilettensitze zu identifizieren, bevor die zumindest eine externe Bestandsdatenbank abgefragt wird.

3. Verfahren nach Anspruch 1 oder Anspruch 2, wobei das Verfahren ferner den Schritt des Erzeugens einer Liste von einheitlichen Referenzlokatoren umfasst, die Orte identifizieren, an denen Bestand des passenden Toilettensitzes oder des passenden gefilterten Toilettensitzes verfügbar ist.

4. Verfahren nach einem der Ansprüche 1 bis 3, wobei eine vorbestimmte Markierung auf der Toilettenschüssel platziert wird und die Markierung als eine Referenz verwendet wird, um zumindest eine Eigenschaft der Toilettenschüssel zu bestimmen.

5. Verfahren nach einem vorhergehenden Anspruch, wobei das Smartphone einen Nivellierungssensor beinhaltet und der Nivellierungssensor verwendet wird, um sicherzustellen, dass das optisch erfasste Bild im Wesentlichen parallel zu der Oberseite der Toilettenschüssel ist.

6. Verfahren nach einem vorhergehenden Anspruch, wobei eine Bildschirmvorlage bereitgestellt ist und der Benutzer die Toilettenschüssel innerhalb dieser Vorlage positioniert, bevor das Bild erfasst wird.

7. Verfahren nach einem vorhergehenden Anspruch, wobei der Benutzer verschiedene Punkte auf dem Bild vor dem Verarbeiten des Bildes auswählt.

8. Verfahren nach einem vorhergehenden Anspruch, wobei die Breite der Schüssel in Intervallen entlang der Länge zwischen dem zentralen Punkt zwischen den zwei Sitzbefestigungsöffnungen und der Spitze der vorderen Kurve der Schale bestimmt wird.

## Revendications

1. Procédé d'identification d'un siège de toilettes comprenant les étapes de :
utilisation d'un smartphone pour capturer optiquement une image d'une cuvette de toilettes ;
réception d'au moins une dimension mesurée en provenance d'un utilisateur qui est entrée dans le smartphone ;
traitement de l'image capturée optiquement, sur la base de ladite au moins une dimension d'entrée, pour déterminer au moins deux caractéristiques à partir d'un groupe comprenant : la distance entre les ouvertures de fixation de la cuvette de toilettes ; la distance allant du point médian des ouvertures de fixation au sommet de l'avant de la cuvette de toilettes ; la forme du bord avant de la cuvette de toilettes ; et le diamètre des ouvertures de fixation ;
l'interrogation d'une base de données de sièges de toilettes pour déterminer les sièges de toilettes correspondants qui ont les mêmes caractéristiques que les caractéristiques déterminées ; et
l'interrogation d'au moins une base de données de stock externe pour établir l'emplacement du stock du siège de toilettes correspondant.

2. Procédé selon la revendication 1, une fois que les sièges de toilettes correspondants ont été identifiés, la demande d'une entrée utilisateur pour identifier des caractéristiques souhaitables et l'interrogation en outre de la base de données de sièges de toilettes pour identifier les sièges de toilettes filtrés correspondants avant d'interroger ladite au moins une base de données de stock externe.

3. Procédé selon la revendication 1 ou la revendication 2, ledit procédé comprenant en outre l'étape de génération d'une liste de localisateurs de référence uniformes qui identifient les emplacements où le stock de siège de toilettes correspondant ou du siège de toilettes filtré correspondant est disponible.

4. Procédé selon l'une quelconque des revendications 1 à 3, un marqueur prédéfini étant placé sur la cuvette de toilettes et ledit marqueur étant utilisé comme référence pour déterminer au moins une caractéristique de la cuvette de toilettes.

5. Procédé selon une quelconque revendication précédente, ledit smartphone comprenant un capteur de nivellement et ledit capteur de nivellement étant utilisé pour s'assurer que l'image capturée optiquement est sensiblement parallèle à la partie supérieure de la cuvette de toilettes.

6. Procédé selon une quelconque revendication précédente, un gabarit à l'écran étant fourni, et ledit utilisateur positionnant la cuvette de toilettes à l'intérieur de ce gabarit avant de capturer l'image.

7. Procédé selon une quelconque revendication précédente, ledit utilisateur sélectionnant divers points sur l'image avant le traitement de l'image.

8. Procédé selon une quelconque revendication précédente, ladite largeur de la cuvette étant déterminée à des intervalles le long de la longueur entre le point central entre les deux ouvertures de fixation de siège et le sommet de la courbe avant du bol.
